# EUROPÄISCHE PATENTSCHRIFT

(11) **EP 3 017 528 B1**
(45) Veröffentlichungstag und Bekanntmachung des Hinweises auf die Patenterteilung: **17.02.2021**
(21) Anmeldenummer: 14766942.8
(22) Anmeldetag: 09.09.2014
(51) Int. Cl.: H02K 7/00, H02K 9/22, H02K 9/193, H02K 17/16

(54) **ELEKTRISCHE MASCHINE MIT EINER WÄRMELEITVORRICHTUNG**
ELECTRIC MACHINE HAVING A HEAT-CONDUCTING DEVICE
MACHINE ÉLECTRIQUE POURVUE D'UN DISPOSITIF THERMOCONDUCTEUR

(30) Priorität: 10.09.2013 EP 13183715
(43) Veröffentlichungstag der Anmeldung: 11.05.2016
(73) Patentinhaber: Siemens Aktiengesellschaft, 80333 München (DE)
(72) Erfinder: BÜTTNER, Klaus, 97618 Hollstadt (DE); KIRCHNER, Klaus, 97645 Ostheim (DE); WARMUTH, Matthias, 97618 Windshausen (DE)
(86) Internationale Anmeldenummer: PCT/EP2014/069123
(87) Internationale Veröffentlichungsnummer: WO 2015/036376

(56) Entgegenhaltungen:
- EP-A1- 2 299 565
- EP-A2- 1 453 180
- DE-C1- 19 921 452
- US-B1- 6 191 511

## Beschreibung

Die Erfindung betrifft eine elektrische Maschine sowie eine Rotor-Welle-Kombination für eine elektrische Maschine.

Eine derartige elektrische Maschine ist aus der DE 10 2009 051 114 A1 bekannt. Es wird dort eine elektrische Maschine beschrieben, die einen auf einer Hohlwelle gelagerten Rotor aufweist, wobei die Hohlwelle in ihrem Inneren einen abgeschlossenen Hohlraum ausbildet, in welchem ein Kältemittel nach einem Thermosyphoneffekt zwischen einem warmen und einem kalten Ende der Hohlwelle zirkulierbar ist. Die elektrische Maschine umfasst einen Stator, der insbesondere innerhalb eines Gehäuses angeordnet ist und den Rotor umgibt. Der Stator ist thermisch mit dem Gehäuse verbunden. Das Gehäuse weist beispielsweise stirnseitig zugängige Kühlkanäle zur Zufuhr eines gekühlten Luftstroms an auf der Außenseite des Gehäuses vorhandenen Kühlrippen auf. Der abgeschlossene Hohlraum weist eine dreidimensionale Transportstruktur zum Transport eines Kältemittels auf. Hierdurch kann die Effektivität der Kühlung eines Thermosyphons verbessert werden. In der DE 10 2009 051 114 A1 werden insbesondere komplexe Geometrien, wie z.B. die des Füllkörpers bzw. der dreidimensionalen Transportstruktur aus keramischen Materialien oder aus Kunststoffen hergestellt. Die Herstellung kann auch aus metallischen Werkstoffen erfolgen.

Weiterhin ist eine derartige elektrische Maschine aus der DE 10 2011 078 791 A1 bekannt. Dort wird eine elektrische Maschine mit einem Stator und einem Rotor und einem geschlossenen Gehäuse, das den Stator und den Rotor nach außen abdichtet, mit einer Hohlwelle vorgeschlagen, auf der der Rotor angeordnet ist. Die Hohlwelle durchdringt das Gehäuse und ragt sowohl aus einer Antriebsseite des Gehäuses als auch aus einer Belüftungsseite des Gehäuses. An der Belüftungsseite ist auf der Hohlwelle drehfest ein Radiallüfter angeordnet. Die Hohlwelle weist an der Belüftungsseite mindestens einen radial gerichteten Durchgang auf, so dass ein innerer Kühlmittelstrom von dem Radiallüfter aus der Hohlwelle durch einen Durchgang radial nach außen förderbar ist.

Aus der DE 199 21 452 C1 ist eine derartige elektrische Maschine bekannt, die eine Stator und einen Rotor hat, der eine Rotorwelle und ein Blechpaket aufweist. Die Rotorwelle ist wenigstens teilweise aus einem hoch wärmeleitenden Material, das sich bis zu einem über das Blechpaket hinausragenden Wellenabschnitt erstreckt, von dem die Wärme über einen Wärmetauscher an eine Flüssigkeit abgegeben wird. Es reicht die von den Rippen des Wellenabschnitts erzeugte Strömung der Flüssigkeit aus, um einen guten Wärmeübergang zu den Austauschflächen des Wärmetauschers zu bewirken. Mit der Kühlflüssigkeit, die eine hohe spezifische Wärme haben kann und mit einer entsprechenden Strömungsgeschwindigkeit an den Austauschflächen vorbeibewegt wird, läßt sich eine intensive Wärn1eableitung erreicht. Die Wärmeableitung über die Rotorwelle kann über die umlaufende Kühlflüssigkeit in gewünschter Höhe eingestellt werden. In Verbindung mit der durch Strahlung und Konvektion vom Rotor zur Gehäusewand gelangenden Wärme reicht die für die Kühlung des Rotor aus, so dass vielfach auf eine künstliche Konvektion für den Rotor verzichtet werden kann. Zumindest kann die elektrische Maschine in geschlossener Bauart ausgeführt werden, wodurch die zufällige oder fahrlässige Berührung der stromführenden und umlaufenden Teile und das Eindringen von Fremdkörpern in das Gehäuse verhindert. Es ist aber auch möglich, auf der Rotorwelle noch einen Ventilator anzuordnen, der Kühlluft durch das Gehäuse der Maschine bewegt. An Stelle einer Welle mit einem natriumgefüllten Hohlraum kann auch eine Vollwelle aus einem hoch wärmeleitfähigen Material wie Aluminiumnitrid vorgesehen sein. In der DE 199 21 452 C1 wird hierzu angeführt, dass mit einer solchen Welle, die aus einem Material von hoher Festigkeit besteht, der Wellenquerschnitt kleiner sein kann, wodurch sich das Gewicht der Welle verringert.

Die EP 2 299 565 A1 offenbart eine Rotor-Welle-Kombination für eine elektrische Maschine, wobei die Rotor-Welle-Kombination einen Rotor und eine Welle umfasst, wobei der Rotor eine Stützvorrichtung und eine Wärmeleitvorrichtung zur Abfuhr einer Abwärme vom Rotor über die Welle aufweist, wobei die Welle in einer ersten Lagervorrichtung der elektrischen Maschine und einer zweiten Lagervorrichtung der elektrischen Maschine um eine Drehachse der Welle drehbar gelagert werden kann, wobei die Stützvorrichtung ein Blechpaket ist, das in einer axialen Richtung geschichtete Bleche aufweist, wobei der Rotor an der Welle befestigt ist oder auf die dazugehörige Welle an der richtigen Position befestigbar ist, wobei die Bleche in dem Blechpaket durch eine Verbindungsvorrichtung fixiert sind, wobei die Verbindungsvorrichtung einen Kurzschlussring mit einem zweiten Material aufweist, wobei der Kurzschlussring an einem ersten axialen Ende der Stützvorrichtung befestigt ist.

Aufgrund der Bestrebungen, hohe Wirkungsgrade bei hohen Leistungsdichten der elektrischen Maschine durch eine effiziente Kühlung zu erreichen, ist es von zentraler Bedeutung, einen weiteren technischen Beitrag zu leisten, um allein, alternativ oder in Kombination mit bekannten Maßnahmen eine elektrische Maschine zu verbessern.

Der Erfindung liegt daher die Aufgabe zugrunde, eine Rotor-Welle-Kombination sowie eine elektrische Maschine mit einer Möglichkeit zur effizienten Kühlung zur Verfügung zu stellen. Diese Aufgabe wird durch eine Rotor-Welle-Kombination mit den Merkmalen des Anspruchs 1 gelöst.
Eine erfindungsgemäße Rotor-Welle-Kombination umfasst die Merkmale von Anspruch 1.

Die Aufgabe wird auch durch eine elektrische Maschine gemäß Anspruch 2 gelöst.

Die erfindungsgemäße Rotor-Welle-Kombination löst die Aufgabe vorteilhaft, indem die Wärmeleitvorrichtung durch den axialen Teil der Welle mit dem ersten Material die Abwärme in hohem Maße in einer kurzen Zeitspanne vom Rotor über die Welle abführen kann. Vorteilhaft führt dies zu einer geringen Erwärmung der elektrischen Maschine und damit zu geringeren Wirkungsgradverlusten durch Erwärmung der elektrischen Maschine. Die Wärmeleitvorrichtung hat gegenüber dem für eine elektrische Maschine funktionsbedingt notwendigen Platzbedarf von Stator, Rotor und Welle vorteilhaft keinen oder vorteilhaft nur einen geringen zusätzlichen Platzbedarf.

Der axiale Teil erstreckt sich mit einer Länge in einer axialen Richtung, die entlang der Drehachse verläuft.

Das erste Material kann aus verschiedenen chemischen Elementen bestehen, wobei das erste Material die spezifische Wärmeleitfähigkeit aufweist, die größer als 100 Wm⁻¹K ist. So kann das erste Material z.B. eine Legierung mit einer spezifischen Wärmeleitfähigkeit sein, die größer als 100 Wm⁻¹K ist.

Das erste Material des axialen Teils kann in radialen Richtungen, die senkrecht zu der axialen Richtung sind, eine ausreichende Dicke für eine im Betrieb der elektrischen Maschine notwendige Kraftübertragung der Welle aufweisen. So kann vorteilhaft durch eine möglichst große Querschnittsfläche der Welle mit der spezifischen Wärmeleitfähigkeit des ersten Materials die Abwärme im höheren Maße in einer kürzeren Zeitspanne vom Rotor über die Welle abgeführt werden.

Der axiale Teil der Welle kann sich über eine gesamte Länge der Welle entlang der axialen Richtung erstrecken. Unter anderem kann so die Welle vorteilhaft aus einem Stück gefertigt werden.

Der axiale Teil der Welle kann ein erster Abschnitt einer Welle sein. Die Welle weist dann einen zweiten Abschnitt und gegebenenfalls einen dritten Abschnitt oder noch weitere Abschnitte auf, die in der axialen Richtung die Welle vor oder hinter dem ersten Abschnitt fortsetzen. Es kann so das erste Material vorteilhaft gezielt für eine effiziente Kühlung der elektrischen Maschine eingesetzt werden.

Bei einer erfindungsgemäßen elektrischen Maschine kann die Welle mithilfe der ersten Lagervorrichtung in einem ersten Lagerschild und mithilfe der zweiten Lagervorrichtung in einem zweiten Lagerschild gelagert sein. Die Lagerschilde oder ein Gehäuse, das die Lagerschilde aufweist, können so vorteilhaft als Drehmomentstütze genutzt werden.

Beim Betrieb einer erfindungsgemäßen elektrischen Maschine als Generator wird der Rotor durch mechanische Energie in Drehung versetzt. Durch ein magnetisches Zusammenwirken zwischen Rotor und Stator kann die mechanische in elektrische Energie umgewandelt werden. Die elektrische Energie kann an einer Wicklung, die am Stator befestigt ist, durch Anschließen eines elektrischen Verbrauchers entnommen werden.

Beim Betrieb einer erfindungsgemäßen elektrischen Maschine als Motor wird über die Wicklung elektrische Energie zugeführt und durch das magnetische Zusammenwirken zwischen Stator und Rotor elektrische Energie in mechanische Energie umgewandelt. Dabei wird der Rotor in Drehung versetzt und es kann an der Welle mechanische Energie an einen mechanischen Verbraucher in Form einer Drehbewegung abgegeben werden.

Beim Betrieb oder nach einem Betrieb einer erfindungsgemäßen elektrischen Maschine führt die nicht vollständige Umwandlung von elektrischer Energie in mechanischer Energie bzw. von mechanischer Energie in elektrische Energie zu der Erwärmung der elektrischen Maschine. Durch die Erwärmung erzeugt die elektrische Maschine die Abwärme.

Das magnetische Zusammenwirken zwischen Rotor und Stator kann über einen Luftspalt erfolgen, der in den radialen Richtungen durch den Stator und den Rotor begrenzt ist. Der Rotor kann eine entsprechende Einrichtung aufweisen, um über den Luftspalt mit dem Stator, insbesondere der am Stator befestigten Wicklung, magnetisch zusammenwirken zu können. Die Einrichtung kann hierfür einen Permanentmagneten und/oder eine Wicklung aufweisen.

Eine erfindungsgemäße Rotor-Welle-Kombination für eine elektrische Maschine weist auch den weiteren Vorteil auf, dass der Rotor und die Welle als eine Kombination, z.B. in einer Verpackungseinheit, für den Einbau in eine erfindungsgemäße elektrische Maschine zur Verfügung gestellt werden können. Da der Rotor und die Welle in ihrer jeweiligen Beschaffenheit vorteilhaft für eine effiziente Kühlung und gegebenenfalls weitere Anforderungen an die Welle vorteilhaft aufeinander abgestimmt sind, ist es vorteilhaft, die Welle und den Rotor als Kombination zur Verfügung zu stellen. So kann sichergestellt werden, dass der Rotor auf die dazugehörige Welle an der richtigen Position befestigt werden kann. Dies garantiert eine effiziente Kühlung der elektrischen Maschine. Insbesondere ist bei der Rotor-Welle-Kombination der Rotor an der Welle befestigt. Insbesondere kann dadurch auch vorteilhaft die Gefahr verringert werden, dass der Rotor in für eine effiziente Kühlung ungeeigneter Weise an der Welle befestigt wird. Weiterhin vorteilhaft führt die Rotor-Welle-Kombination zu einer geringeren Erwärmung des Rotors, die eine gegebenenfalls vorzeitige Schädigung des Rotors verhindern kann.

Eine nicht zur Erfindung gehörende Verwendung einer Welle für eine elektrische Maschine weist den weiteren Vorteil auf, dass in oder nach einem Betrieb der elektrischen Maschine einer Abwärme vom Rotor über die Welle mit dem ersten Material abgeführt werden kann, wobei das ersten Material eine spezifische Wärmeleitfähigkeit aufweist, die größer als 100 Wm⁻¹K ist.

Ein weiterer Vorteil besteht - nicht zur Erfindung gehörend - darin, dass eine herkömmliche Welle durch eine erfindungsgemäße Welle ersetzt werden kann, ohne dass große konstruktive Veränderungen an der elektrischen Maschine, insbesondere dem Rotor, notwendig sind. So kann vorteilhaft einfach und kostengünstig eine elektrische Maschine mit einer Möglichkeit zur effizienten Kühlung zur Verfügung gestellt werden.

Vorteilhafte Ausgestaltungen der Erfindung sind in den abhängigen Ansprüchen angegeben. So ist eine Ausgestaltung der erfindungsgemäßen elektrischen Maschine vorteilhaft, bei der das erste Material der Wärmeleitvorrichtung ein Nichteisenmetall ist. Es wurde erkannt, dass ein Nichteisenmetall für eine Welle einer elektrischen Maschine vorteilhaft für eine effiziente Kühlung genutzt werden kann.

Als Nichteisenmetalle werden alle Metalle außer Eisen bezeichnet, sowie Metalllegierungen, in denen Eisen nicht als Hauptelement enthalten ist, bzw. der Anteil an Reineisen (Fe) 50% nicht übersteigt.

Das Nichteisenmetall kann Aluminium aufweisen. Es kann so vorteilhaft eine hohe Wärmeleitfähigkeit bei einem geringeren Gewicht der Welle erreicht werden. Bei einem geringeren Gewicht der Welle erzeugt die elektrische Maschine bei gleicher Beanspruchung eine geringere Abwärme. So ist vorteilhaft eine effiziente Kühlung möglich, da ein geringerer Bedarf an Kühlleistung vorhanden ist.

In einer weiteren vorteilhaften Ausgestaltung einer erfindungsgemäßen elektrischen Maschine weist der axiale Teil der Welle einen Montageabschnitt auf, an dem der Rotor mit einer kraftschlüssigen Verbindung befestigt ist, wobei die kraftschlüssige Verbindung die Stützvorrichtung und den Montageabschnitt umfasst, wobei die Stützvorrichtung den Montageabschnitt umschließt. Es wurde erkannt, dass so zwischen dem Rotor und der Welle eine drehfeste Verbindung zur Übertragung eines Drehmoments auch bei einer geringen Festigkeit der Welle möglich ist. Zusätzlich kann die Wärmeleitvorrichtung die kraftschlüssige Verbindung umfassen. Die kraftschlüssige Verbindung trägt dann vorteilhaft zur Abfuhr der Abwärme vom Rotor über die Welle durch Aneinanderpressen von Flächen der Stützvorrichtung und des Montageabschnitts bei.

Die Stützvorrichtung kann einen Aufbau aufweisen, der aufgrund der Funktion der Stützvorrichtung in der elektrischen Maschine die Abwärme nur mit einer geringen Wärmeleitfähigkeit zu der kraftschlüssigen Verbindung zwischen Stützvorrichtung und Montageabschnitt führen kann. Die Funktion der Stützvorrichtung kann durch das magnetische Zusammenwirken zwischen Stator und Rotor festgelegt sein.

Die kraftschlüssige Verbindung mit der Stützvorrichtung und dem Montageabschnitt kann dadurch erfolgen, dass der Montageabschnitt bei Raumtemperatur, z.B. 20 °C, vor einem Befestigen des Rotors an der Welle eine größere Querschnittsfläche in radialen Richtungen aufweist als eine Öffnung der Stützvorrichtung für die Welle. Die kraftschlüssige Verbindung kann dann bei einem Befestigen der Welle an dem Rotor durch ein Aufschrumpfen hergestellt werden. Beim Aufschrumpfen wird die Stützvorrichtung auf eine Temperatur erwärmt, bei der die Öffnung der Stützvorrichtung eine größere Querschnittsfläche in radialen Richtungen aufweist als bei Raumtemperatur. Es wird dann die Stützvorrichtung auf den Montageabschnitt aufgeschoben.

Erfindungsgemäß ist in der Rotor-Welle-Kombination die Stützvorrichtung ein Blechpaket, das in einer axialen Richtung geschichtete Bleche aufweist, wobei die Bleche in dem Blechpaket durch eine Verbindungsvorrichtung fixiert sind. So können die durch die Verbindungsvorrichtung vorteilhaft aneinander gepressten geschichteten Bleche zur Abfuhr der Abwärme vom Rotor über die Welle vorteilhaft beitragen.

Die Funktion der Stützvorrichtung ist durch das magnetische Zusammenwirken zwischen Stator und Rotor festgelegt, indem die Stützvorrichtung ein Material mit weichmagnetischen Eigenschaften aufweisen muss, damit das Material bei einer im Betrieb der elektrischen Maschine auftretenden wechselnden Orientierung von Magnetfeldern die Magnetfelder mit geringen Verlusten führen kann. Die Bleche weisen das Material mit weichmagnetischen Eigenschaften auf.

In einer weiteren vorteilhaften Ausgestaltung einer erfindungsgemäßen elektrischen Maschine ist zumindest ein Teil der Verbindungsvorrichtung durch ein Druckgussverfahren am Blechpaket erzeugt. Beim Druckgussverfahren wird ein Druck erzeugt, der das Blechpaket vorteilhaft zusammenpresst. Das zumindest eine Teil der Verbindungsvorrichtung wird während des Druckgussverfahrens an dem zusammengepressten Blechpaket vorteilhaft angebracht und übt zusätzlich durch ein Schrumpfen des zumindest einen Teils bei einem Erkalten des zumindest einen Teils nach dem Druckgussverfahren eine weitere Presskraft auf das Blechpaket aus. So können die durch das zumindest eine Teil vorteilhaft aneinander gepressten geschichteten Bleche zur Abfuhr der Abwärme vom Rotor über die Welle vorteilhaft beitragen.

Das Blechpaket kann durch eine formschlüssige Verbindung, die das zumindest eine Teil und das Blechpaket aufweist, zusammengepresst sein. So kann vorteilhaft das Zusammenpressen der Bleche über einen langen Zeitraum aufrechterhalten werden.

In einer weiteren vorteilhaften Ausgestaltung einer erfindungsgemäßen elektrischen Maschine weist der axiale Teil der Welle eine axiale Bohrung zur Abfuhr der Abwärme vom Rotor über die Welle auf. Die Abwärme kann so vom Rotor über die Welle durch ein Kühlmittel in der axialen Bohrung abgeführt werden. Das Kühlmittel kann gasförmig oder flüssig sein. Es kann so vorteilhaft die Abwärme der elektrischen Maschine zu deren Kühlung über die axiale Bohrung des axialen Teils der Welle aus dem ersten Material mit einer hohen Wärmeleitfähigkeit, insbesondere des ersten Materials, abgeführt werden.

Vorteilhaft kann die axiale Bohrung eine Länge aufweisen, die sich in der axialen Richtung bis zu einem Bereich zwischen der ersten Lagervorrichtung und einem hierzu direkt benachbarten Ende des Rotors erstreckt. Aufgrund des ersten Materials, das eine spezifische Wärmeleitfähigkeit aufweist, die größer als 100 Wm⁻¹K ist, kann sich die Abwärme in hohem Maße in einer kurzen Zeitspanne im ersten Material entlang der Länge der axialen Bohrung ausbreiten, um vorteilhaft entlang der gesamten Länge der axialen Bohrung an einer radialen Begrenzungsfläche in das Kühlmittel abgeführt werden zu können.

Eine erfindungsgemäße elektrische Maschine kann ein Zuflusselement aufweisen, das sich so in die axiale Bohrung erstreckt, dass das Kühlmittel, insbesondere eine Kühlflüssigkeit, aus dem Zuflusselement in die axiale Bohrung fließen kann. So kann die axiale Bohrung vorteilhaft zur effizienten Kühlung einer erfindungsgemäßen elektrischen Maschine genutzt werden.

Das Zuflusselement kann sich in der axialen Bohrung in der axialen Richtung bis zu einem Bereich zwischen der ersten Lagervorrichtung und einem hierzu direkt benachbarten Ende des Rotors erstrecken. So kann das Kühlmittel entlang einer gesamten Länge des Rotors in axialer Richtung die Abwärme aus dem Rotor abführen und so eine effiziente Kühlung ermöglichen.

In einer weiteren vorteilhaften Ausgestaltung einer erfindungsgemäßen elektrischen Maschine weist die axiale Bohrung eine radiale Begrenzungsfläche mit einer Geometrie zur Abfuhr der Abwärme vom Rotor über die Welle auf. Die Geometrie kann eine Geometrie zur Oberflächenvergrößerung der axialen Bohrung sein, insbesondere durch Rippen an der radialen Begrenzungsfläche. Die Geometrie kann eine Transportstruktur sein, durch die ein Transport des Kühlmittels in der axialen Bohrung, insbesondere in einer zur axialen Richtung parallelen Richtung, ermöglicht ist oder unterstützt wird. Die Geometrie kann so vorteilhaft durch eine verbesserte Abfuhr der Abwärme von der Welle zum Kühlmittel und/oder durch einen verbesserten Transport des Kühlmittels zu einer effizienten Kühlung beitragen. Weiterhin vorteilhaft für eine effiziente Kühlung kann die Geometrie ein Material mit einer spezifischen Wärmeleitfähigkeit aufweisen, die größer als 100 Wm⁻¹K ist.

In der erfindungsgemäßen Rotor-Welle-Kombination weist die Verbindungsvorrichtung einen Kurzschlussring mit einem zweiten Material auf, wobei der Kurzschlussring an einem ersten axialen Ende der Stützvorrichtung befestigt ist, wobei zur Abfuhr der Abwärme vom Rotor über die Welle der Kurzschlussring direkt an den axialen Teil der Welle angebunden ist. Für eine direkte Anbindung des Kurzschlussrings zur Abfuhr der Abwärme vom Rotor über die Welle an den axialen Teil der Welle berührt eine Oberfläche des Kurzschlussrings eine Oberfläche des axialen Teils der Welle. So kann vorteilhaft eine hohe Wärmeleitfähigkeit des Kurzschlussrings und des axialen Teils der Welle zur Abfuhr der Abwärme vom Rotor über die Welle genutzt werden. Vorteilhaft kann ein gegebenenfalls vorhandener Kurzschlussring durch seine massive Ausführung eine hohe Wärmeleitfähigkeit zur Abfuhr der Abwärme aufweisen.

In der erfindungsgemäßen Rotor-Welle-Kombination ist der betragsmäßige Unterschied der Wärmeausdehnungskoeffizienten des ersten Materials und des zweiten Materials kleiner als 4 x 10⁻⁶K⁻¹. So kann vorteilhaft die direkte Anbindung des Kurzschlussrings an den axialen Teil der Welle über einen größeren Temperaturbereich aufrechterhalten werden. So kann vorteilhaft ein Abführen der Abwärme vom Rotor über die Welle über die direkte Anbindung des Kurzschlussrings an den axialen Teil über einen großen Temperaturbereich im hohen Maße erfolgen. Die direkte Anbindung des Kurzschlussrings an den axialen Teil der Welle kann durch eine bei Raumtemperatur vorhandene kraftschlüssige Verbindung mit einer auf eine Oberfläche des Kurzschlussrings und einer Oberfläche des axialen Teils der Welle wirkenden Normalkraft gegeben sein. Vorteilhaft bleibt durch den betragsmäßige Unterschied der Wärmeausdehnungskoeffizienten des ersten Materials und des zweiten Materials, der kleiner als 4 x 10⁻⁶K⁻¹ ist, die Normalkraft über einen großen Temperaturbereich so erhalten, dass eine vorteilhafte Wärmeleitung durch Aneinanderpressen der Oberfläche des Kurzschlussrings und der Oberfläche des axialen Teils vorhanden ist. Die kraftschlüssige Verbindung kann dadurch erfolgen, dass bei Raumtemperatur, z.B. 20 °C, vor einem Befestigen des Rotors an der Welle der axiale Teil der Welle eine größere Querschnittsfläche in radialen Richtungen aufweist als eine Öffnung des Kurzschlussrings für die Welle.

Die kraftschlüssige Verbindung zwischen dem axialen Teil der Welle und dem Kurzschlussring kann bei einem Befestigen der Welle an dem Rotor, insbesondere durch ein Aufschrumpfen hergestellt werden. So können das Herstellen der kraftschlüssigen Verbindung und das Befestigen der Welle an dem Rotor in einem Arbeitsgang erfolgen.

In einer weiteren vorteilhaften Ausgestaltung einer erfindungsgemäßen elektrischen Maschine weist das erste Material einen größeren Wärmeausdehnungskoeffizienten auf als das zweite Material. Da sich der Kurzschlussring mit zunehmender Erwärmung in geringerem Maße ausdehnt als der axiale Teil der Welle, presst sich der Kurzschlussring mit zunehmender Erwärmung des Kurzschlussrings und/oder der Welle in einem stärkeren Maß gegen den axialen Teil der Welle. So wird insbesondere bei einer Abwärme, die eine hohe Temperatur des Kurzschlussrings bzw. des axialen Teils der Welle verursacht, die Abwärme vorteilhaft in hohem Maße vom Rotor über die Welle durch die direkte Anbindung des Kurzschlussrings an den axialen Teil abgeführt.

In einer weiteren vorteilhaften Ausgestaltung einer erfindungsgemäßen elektrischen Maschine weist das zweite Material eine spezifische Wärmeleitfähigkeit auf, die größer als 100 Wm⁻¹K ist. Es kann so vorteilhaft die Abwärme vom Rotor über den Kurzschlussring und den axialen Teil der Welle abgeführt werden.

Das zweite Material kann eine spezifische Wärmeleitfähigkeit aufweisen, die größer als 200 Wm⁻¹K ist. So kann vorteilhaft eine schnelle Abfuhr der Abwärme über den Kurzschlussring erfolgen. Es wird so eine effiziente Kühlung zur Verfügung gestellt, die vorteilhaft eine vorzeitige Schädigung des Rotors durch Erwärmung verhindert.

In einer weiteren vorteilhaften Ausgestaltung einer erfindungsgemäßen elektrischen Maschine weist das zweite Material Aluminium oder Kupfer oder Silber auf.

In einer weiteren vorteilhaften Ausgestaltung einer erfindungsgemäßen elektrischen Maschine weist die Stützvorrichtung Nuten auf, in denen Leiter zur Abfuhr der Abwärme vom Rotor über die Welle angeordnet sind, wobei die Leiter mit dem Kurzschlussring verbunden sind. Die Leiter sind vorteilhaft ein Bestandteil der entsprechenden Einrichtung des Rotors für das magnetische Zusammenwirken zwischen Rotor und Stator. Die in der entsprechenden Einrichtung in einem Betrieb der elektrischen Maschine erzeugte Abwärme kann vorteilhaft über die Leiter in den Kurzschlussring abgeführt werden.

Die Leiter können Stäbe sein, die Kupfer aufweisen. So kann vorteilhaft die Abwärme in einer kurzen Zeitspanne in den Kurzschlussring abgeführt werden.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: ein erstes Ausführungsbespiel einer elektrischen Maschine,
- FIG 2: ein zweites Ausführungsbeispiel einer elektrischen Maschine, bei der die Welle einen zweiten Abschnitt aufweist.

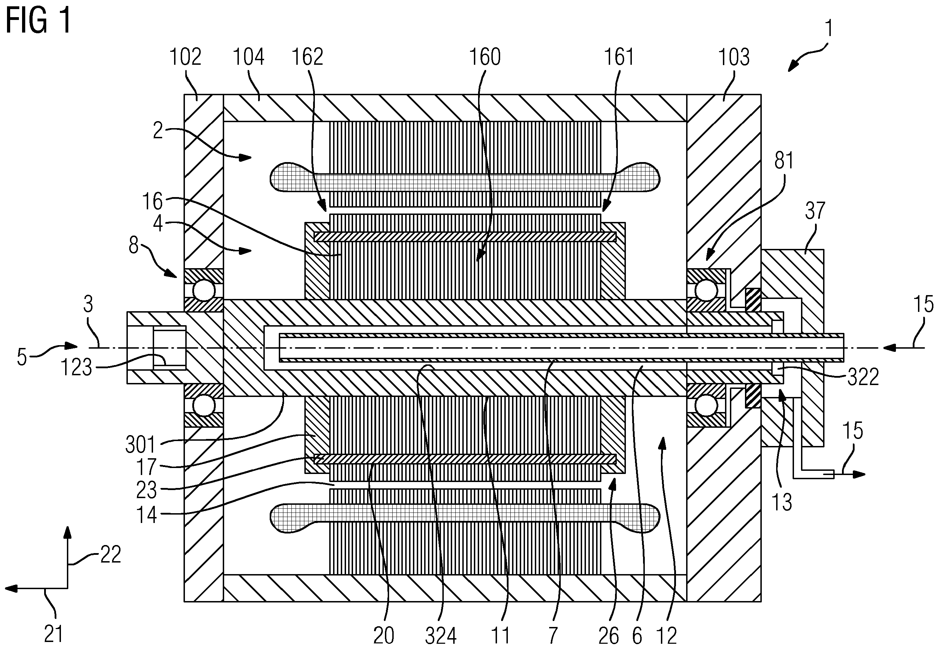

FIG 1 zeigt ein Ausführungsbeispiel einer elektrischen Maschine 1, die einen Rotor 4 umfasst, der eine Stützvorrichtung 160 und eine Wärmeleitvorrichtung 12 zur Abfuhr einer Abwärme vom Rotor 4 über die Welle 5 aufweist. Weiterhin umfasst die elektrische Maschine 1 einen Stator 2, der in einem Betrieb der elektrischen Maschine 1 mit dem Rotor 4 magnetisch zusammenwirkt. Die elektrische Maschine umfasst außerdem eine erste Lagervorrichtung 8, eine zweite Lagervorrichtung 81 und eine Welle 5, die in der ersten Lagervorrichtung 8 und in der zweiten Lagervorrichtung 81 um eine Drehachse 3 der Welle 5 drehbar gelagert ist. Der Rotor 4 ist an der Welle 5 befestigt. Die Wärmeleitvorrichtung 12 weist zur Abfuhr der Abwärme vom Rotor 4 über die Welle 5 einen axialen Teil 301 der Welle 5 mit einem ersten Material auf, das eine spezifische Wärmeleitfähigkeit aufweist, die größer als 100 Wm⁻¹K ist. Der axiale Teil 301 der Welle 5 erstreckt sich über eine Gesamtlänge der Welle 5 entlang einer axialen Richtung 21.

Das erste Material des axialen Teils ist ein Nichteisenmetall, das eine Legierung ist. In dem Ausführungsbeispiel gemäß FIG 1 ist das erste Material AlZn5,5MgCu, das eine spezifische Wärmeleitfähigkeit zwischen 130 Wm⁻¹K und 160 Wm⁻¹K aufweist. Das Nichteisenmetall weist so Aluminium auf.

Der axiale Teil 301 der Welle 5 weist einen Montageabschnitt 11 auf, an dem der Rotor 4 mit einer kraftschlüssigen Verbindung befestigt ist, wobei die kraftschlüssige Verbindung die Stützvorrichtung 160 und den Montageabschnitt 11 umfasst, wobei die Stützvorrichtung 160 den Montageabschnitt 11 umschließt. Die Stützvorrichtung 160 ist ein Blechpaket, das in der axialen Richtung 21 geschichtete Bleche 16 aufweist, wobei die Bleche 16 in dem Blechpaket durch eine Verbindungsvorrichtung 26 fixiert sind. Bei der elektrischen Maschine 1 gemäß FIG 1 ist zumindest ein Teil der Verbindungsvorrichtung 26 durch ein Druckgussverfahren am Blechpaket erzeugt. Das zumindest eine Teil der Verbindungsvorrichtung 26 ist ein Kurzschlussring 17. Die Verbindungsvorrichtung 26 weist den Kurzschlussring 17 mit einem zweiten Material auf, wobei der Kurzschlussring 17 an einem ersten axialen Ende 162 der Stützvorrichtung 160 befestigt ist, wobei zur Abfuhr der Abwärme vom Rotor 4 über die Welle 5 der Kurzschlussring 17 direkt an den axialen Teil 301 der Welle 5 angebunden ist. Die Verbindungsvorrichtung 26 weist einen weiteren Kurzschlussring mit dem zweiten Material auf, wobei der weitere Kurzschlussring 17 an einem zweiten axialen Ende 161 der Stützvorrichtung 160 befestigt ist, wobei zur Abfuhr der Abwärme vom Rotor 4 über die Welle 5 der weitere Kurzschlussring direkt an den axialen Teil 301 der Welle 5 angebunden ist. In dem Ausführungsbeispiel gemäß FIG 1 besteht die Verbindungsvorrichtung 26 aus dem Kurzschlussring 17, dem weiteren Kurzschlussring und Leitern 23, wobei der Kurzschlussring 17 und der weitere Kurzschlussring durch ein Druckgussverfahren am Blechpaket erzeugt sind. Das erste Material weist einen größeren Wärmeausdehnungskoeffizienten auf als das zweite Material. Der betragsmäßige Unterschied der Wärmeausdehnungskoeffizienten des ersten und des zweiten Materials ist kleiner als 4 x 10⁻⁶K⁻¹. In dem Ausführungsbeispiel gemäß FIG 1 ist das zweite Material Al99,6, d.h. 99,6%iges Reinaluminium. Der Wärmeausdehnungskoeffizient des zweiten Materials Al99,6 ist 23,1 x 10⁻⁶K⁻¹. Der Wärmeausdehnungskoeffizient des ersten Materials AlZn5,5MgCu ist 23,4 x 10⁻⁶K⁻¹. Das zweite Material Al99,6 weist eine spezifische Wärmeleitfähigkeit auf, die größer als 100Wm⁻¹K ist. Ein weiteres Beispiel für Reinalumi nium Al99,5 weist eine Wärmeleitfähigkeit von ca. 210Wm⁻¹K bis 230Wm⁻¹K auf. Das zweite Material Al99,6 weist somit aufgrund des höheren Anteils des chemischen Elements Al eine höhere Wärmeleitfähigkeit als zumindest 210Wm⁻¹K auf. Da das zweite Material Aluminium aufweist, weist der Kurzschlussring 17 eine geringe Masse auf. So hat der Rotor 4 vorteilhaft ein geringes Trägheitsmoment.

Bei der elektrischen Maschine 1 gemäß FIG 1 weist der axiale Teil 301 der Welle 5 eine axiale Bohrung 6 zur Abfuhr der Abwärme vom Rotor 4 über die Welle 5 auf. Die axiale Bohrung 6 weist eine Länge auf, die sich in der axialen Richtung 21 bis zu einem Bereich zwischen der ersten Lagervorrichtung 8 und einem hierzu direkt benachbarten Ende des Rotors 4 erstreckt. Die elektrische Maschine 1 weist ein Zuflusselement 7 auf, das sich so in die axiale Bohrung 6 erstreckt, dass das Kühlmittel 15, insbesondere eine Kühlflüssigkeit, aus dem Zuflusselement 7 in die axiale Bohrung 6 fließen kann. Die Fließrichtung des Kühlmittels 15, insbesondere der Kühlflüssigkeit, ist durch Pfeile in FIG 1 angedeutet. Das Zuflusselement 7 ist ein Einlassrohr, das in einem Träger 37 befestigt ist. Der Träger 37 ist an einem Gehäuse 104 der elektrischen Maschine 1 befestigt.

Die Stützvorrichtung 160 weist Nuten 20 auf, in denen Leiter 23 zur Abfuhr der Abwärme vom Rotor 4 über die Welle 5 angeordnet sind, wobei die Leiter 23 mit dem Kurzschlussring 17 verbunden sind. Die Leiter 23 sind ein Bestandteil der entsprechenden Einrichtung des Rotors 4 für das magnetische Zusammenwirken zwischen Rotor 4 und Stator 2. In dem Ausführungsbeispiel gemäß FIG 1 sind die Leiter 23 Kupferstäbe, die mit dem Kurzschlussring 17 und dem weiteren Kurzschlussring elektrisch verbunden sind. Die entsprechende Einrichtung des Rotors 4 für das magnetische Zusammenwirken zwischen Rotor 4 und Stator 2 ist so durch die Kupferstäbe, den Kurzschlussring 17 und den weiteren Kurzschlussring gebildet. Da die entsprechende Einrichtung in dem Ausführungsbeispiel gemäß FIG 1 keine weiteren Bestandteile aufweist, ist die elektrische Maschine 1 gemäß FIG 1 eine Asynchronmaschine.

Das Ausführungsbeispiel der elektrischen Maschine 1 gemäß FIG 1 weist zu deren Schutz das Gehäuse 104 mit einem ersten Lagerschild 102 und einem zweiten Lagerschild 103 auf, wobei in dem Gehäuse 104 der Stator 2 angeordnet ist und der Rotor 4 in einer durchgehenden Ausnehmung 14 des Stators 2 drehbar gelagert ist. Die drehbare Lagerung des Rotors 4 erfolgt über die Welle 5 mit der ersten Lagervorrichtung 8 und der zweiten Lagervorrichtung 81. Die erste Lagervorrichtung 8 ist in dem ersten Lagerschild 102 angeordnet und weist ein Wälzlager auf. Die zweite Lagervorrichtung 81 ist in dem zweiten Lagerschild 103 angeordnet und weist ebenfalls ein Wälzlager auf.

Bei einem Ausführungsbeispiel eines Kühlsystems für eine elektrische Maschine 1 gemäß FIG 1 umfasst der Kühlmittelkreislauf eine Kühlmittelpumpe zum Transportieren des Kühlmittels von der Kühlmittelpumpe zu einem Kühlmitteleintritt der elektrischen Maschine und von einem Kühlmittelaustritt der elektrischen Maschine zu der Kühlmittelpumpe zurück.

Der Kühlmittelein- und -austritt der elektrischen Maschine 1 sind in FIG 1 durch die Pfeile gekennzeichnet. So kann vorteilhaft das Kühlmittel 15 extern zugeführt werden und unabhängig von einem Betrieb der elektrischen Maschine 1 von der Kühlmittelpumpe bedarfsgerecht transportiert werden. Dabei wird das Kühlmittel 15 durch die Kühlmittelpumpe an einem ersten Ende 13 der Welle 15 in das Zuflusselement 7 transportiert. Das Zuflusselement 7, insbesondere das Einlassrohr, erstreckt sich in der axialen Bohrung 6 in der axialen Richtung 21 bis zu dem Bereich zwischen der ersten Lagervorrichtung 8 und dem hierzu direkt benachbarten Ende des Rotors 4. In diesem Bereich kann das Kühlmittel 15, insbesondere eine Kühlflüssigkeit, aus dem Zuflusselement 7 in die axiale Bohrung 6 fließen und umgelenkt werden, um in der axialen Bohrung 6 zu dem ersten Ende 13 der Welle 5 fließen zu können. Dort kann das Kühlmittel 15, insbesondere die Kühlflüssigkeit, in einen Hohlraum fließen, über den es die elektrische Maschine 1 verlassen kann. Bei oder nach einem Betrieb der elektrischen Maschine 1 führt die nicht vollständige Umwandlung von elektrischer Energie in mechanische Energie bzw. von mechanischer Energie in elektrische Energie zu der Erwärmung der elektrischen Maschine 1. Dabei wird die durch die Erwärmung erzeugte Abwärme durch die Leiter 23 in den Kurzschlussring 17 und den weiteren Kurzschlussring abgeführt. Die Abwärme wird im Kurzschlussring 17 und dem weiteren Kurzschlussring in hohem Maße und in kurzer Zeit über die direkte Anbindung des Kurzschlussrings 17 und des weiteren Kurzschlussrings an den axialen Teil 301 der Welle 5 abgeführt.

Im axialen Teil 301 der Welle 5 wird die Abwärme in hohem Maße in einer kurzen Zeitspanne aus dem ersten Material mit der hohen Wärmeleitfähigkeit in das Kühlmittel 15 abgeführt. Das Kühlmittel 15 nimmt die Abwärme an einer radialen Begrenzungsfläche 324 der axialen Bohrung 6 auf. Die Stützvorrichtung 160 weist einen Aufbau auf, der aufgrund der Funktion der Stützvorrichtung 160 in der elektrischen Maschine 1 die Abwärme nur mit einer geringen Wärmeleitfähigkeit zu der kraftschlüssigen Verbindung zwischen Stützvorrichtung 160 und Montageabschnitt 11 führen kann. Die Funktion der Stützvorrichtung 160 ist in dem Ausführungsbeispiel der FIG 1 durch das magnetische Zusammenwirken zwischen Stator 2 und Rotor 4 festgelegt, indem die Stützvorrichtung 160 ein Material mit weichmagnetischen Eigenschaften aufweist. Die Bleche 16 weisen das Material mit weichmagnetischen Eigenschaften auf. Aufgrund des ersten Materials, das die spezifische Wärmeleitfähigkeit aufweist, die größer als 100 Wm⁻¹K ist, kann sich die Abwärme in hohem Maße in einer kurzen Zeitspanne im ersten Material entlang der Länge der axialen Bohrung 6 ausbreiten, um vorteilhaft entlang der gesamten Länge der axialen Bohrung 6 an der radialen Begrenzungsfläche 324 in das Kühlmittel 15 abgeführt werden zu können. Die gesamte Länge der axialen Bohrung 6 umfasst auch das Blechpaket mit der geringen Wärmeleitfähigkeit. Vorteilhaft wird so die radiale Begrenzungsfläche 324 auch zwischen dem ersten axialen Ende 162 der Stützvorrichtung 160 und dem zweiten axialen Ende 161 der Stützvorrichtung 160 im hohen Maße zur Abfuhr der Abwärme in das Kühlmittel 15 genutzt, auch wenn die Stützvorrichtung 160 die Abwärme nur mit einer geringen Wärmeleitfähigkeit zu der kraftschlüssigen Verbindung zwischen Stützvorrichtung 160 und Montageabschnitt 11 führen kann.

Die Welle 5 weist an einer Antriebsseite der elektrischen Maschine 1 eine Innenverzahnung 123 auf, wobei sich die Antriebsseite an einem zweiten Ende der Welle 5 befindet. Hierdurch weist die elektrische Maschine 1 vorteilhaft bereits einen Teil eines Getriebes auf, der zur Anpassung von kinematischen Größen der elektrischen Maschine 1 an einen anzutreibenden Gegenstand verwendet wird.

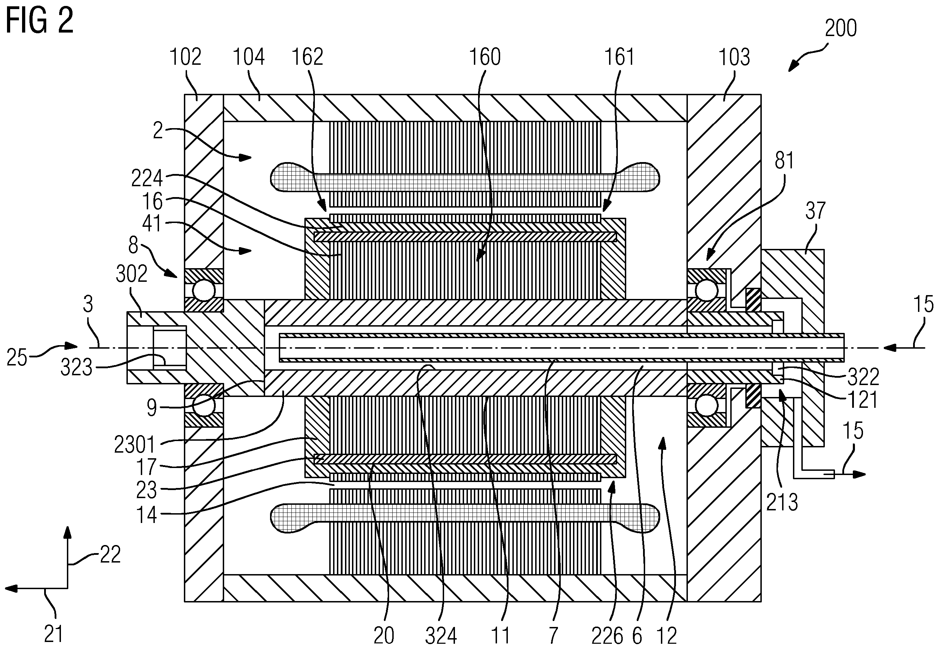

Die FIG 2 zeigt ein zweites Ausführungsbeispiel einer elektrischen Maschine 200, bei der eine Welle 25 einen zweiten Abschnitt 302 aufweist. Die Welle 25 weist in der axialen Richtung 21 der Drehachse 3 aufeinander folgend einen axialen Teil 2301 der Welle 25 mit dem ersten Material und den zweiten Abschnitt 302 mit einem dritten Material auf, wobei das erste Material und das dritte Material an einer Stoßstelle 9 des axialen Teil 2301 und des zweiten Abschnitts 302 stoffschlüssig verbunden sind. Der axiale Teil 2301 der Welle 25 ist ein erster Abschnitt der Welle 25. In dem Ausführungsbeispiel gemäß FIG 2 ist der axiale Teil 2301 mit dem zweiten Abschnitt 302 durch Schweißen verbunden. Die Schweißverbindung kann nach dem Stand der Technik geeignet erfolgen oder gemäß einer Anmeldung des Anmelders, die dasselbe Prioritätsdatum besitzt wie diese Anmeldung. Die Anmeldung mit demselben Prioritätsdatum weist eine homogene und stoffschlüssige Verbindung des ersten Materials und eines zweiten Materials an der Stoßstelle 9 auf, wobei das dritte Material des Ausführungsbeispiels gemäß FIG 2 in der Anmeldung mit demselben Prioritätsdatum dem zweiten Material entspricht. So wird das erste Material vorteilhaft gezielt für eine effiziente Kühlung der elektrischen Maschine 200 eingesetzt, da der zweite Abschnitt 302 das dritte Material mit einer spezifischen Wärmeleitfähigkeit aufweist, die kleiner als 100Wm⁻¹K ist. Das dritte Material lässt eine Abfuhr der Abwärme in einer Richtung zur Antriebsseite nur in geringem Maße zu. Ein großer Unterschied in der spezifischen Wärmeleitfähigkeit des ersten und des dritten Materials, insbesondere um den Faktor 2 oder größer, führt zu einer gezielten Umlenkung der Abwärme in das erste Material. In dem Ausführungsbeispiel der FIG 2 wird vorteilhaft als drittes Material ein härtbarer Stahl verwendet. Der härtbare Stahl hat zusätzlich den Vorteil, dass an der Antriebsseite eine Innenverzahnung 323 angebracht sein kann, die große Kräfte mit geringem Verschleiß der Innenverzahnung 323 von der elektrischen Maschine 200 auf einen anzutreibenden Gegenstand übertragen kann. In dem Ausführungsbeispiel der FIG 2 wird als härtbarer Stahl 42CrMo4 verwendet. Die spezifische Wärmeleitfähigkeit von 42CrMo4 beträgt 42,6Wm⁻¹K.

In dem Ausführungsbeispiel der FIG 2 umfasst die elektrische Maschine einen Rotor 41 mit einer gegenüber der elektrischen Maschine 1 der FIG 1 geänderten Ausführungsform einer Verbindungsvorrichtung 226. Die Verbindungsvorrichtung 226 weist neben dem Kurzschlussring 17, dem weiteren Kurzschlussring und Leitern 23 Teilleiter 224 auf, die neben den Leitern 23 in Nuten 220 angeordnet sind. Die Leiter 23 gemäß dem Ausführungsbeispiel der FIG 2 haben eine geringere Querschnitts fläche als die Leiter 23 gemäß dem Ausführungsbeispiel der FIG 1. Die Teilleiter 224, der Kurzschlussring 17 und der weiteren Kurzschlussring werden durch ein Druckgussverfahren am Blechpaket erzeugt. So üben zusätzlich durch ein Schrumpfen bei einem Erkalten nach dem Druckgussverfahren die Teilleiter 224, der Kurzschlussring 17 und der weiteren Kurzschlussring vorteilhaft eine weitere Presskraft auf das Blechpaket aus.

## Patentansprüche

1. Rotor-Welle-Kombination für eine elektrische Maschine (1,200), wobei die Rotor-Welle-Kombination einen Rotor (4, 41) und eine Welle (5, 25) umfasst,
- wobei der Rotor (4, 41) eine Stützvorrichtung (160) und eine Wärmeleitvorrichtung (12) zur Abfuhr einer Abwärme vom Rotor (4, 41) über die Welle (5, 25) aufweist,
- wobei die Welle (5, 25) in einer ersten Lagervorrichtung (8) der elektrischen Maschine (1, 200) und einer zweiten Lagervorrichtung (81) der elektrischen Maschine (1, 200) um eine Drehachse (3) der Welle (5, 25) drehbar gelagert werden kann,
- wobei die Stützvorrichtung (160) ein Blechpaket ist, das in einer axialen Richtung (21) geschichtete Bleche (16) aufweist,
- wobei der Rotor (4, 41) an der Welle (5, 25) befestigt ist oder auf die dazugehörige Welle (5,25) an der richtigen Position befestigbar ist,
- wobei die Wärmeleitvorrichtung (12) zur Abfuhr der Abwärme vom Rotor (4, 41) über die Welle (5, 25) einen axialen Teil (301, 2301) der Welle (5, 25) mit einem ersten Material aufweist, das eine spezifische Wärmeleitfähigkeit aufweist, die größer als 100 Wm⁻¹K ist,
- wobei die Bleche (16) in dem Blechpaket durch eine Verbindungsvorrichtung (26, 226) fixiert sind, wobei die Verbindungsvorrichtung (26, 226) einen Kurzschlussring (17) mit einem zweiten Material aufweist, wobei der Kurzschlussring (17) an einem ersten axialen Ende (162) der Stützvorrichtung (160) befestigt ist, wobei zur Abfuhr der Abwärme vom Rotor (4, 41) über die Welle (5, 25) der Kurzschlussring (17) direkt an den axialen Teil (301) der Welle (5, 25) angebunden ist oder durch Befestigen des Rotors (4, 41) auf der dazugehörigen Welle (5, 25) an der richtigen Position angebunden werden kann, wobei der betragsmäßige Unterschied der Wärmeausdehnungskoeffizienten des ersten Materials und des zweiten Materials kleiner als 4 x 10⁻⁶K⁻¹ ist.

2. Elektrische Maschine (1, 200) mit einer Rotor-Welle-Kombination nach Anspruch 1,
- wobei der Rotor (4, 41) an der Welle (5, 25) befestigt ist,
- wobei zur Abfuhr der Abwärme vom Rotor (4, 41) über die Welle (5, 25) der Kurzschlussring (17) direkt an den axialen Teil (301) der Welle (5, 25) angebunden ist,
umfassend
- einen Stator (2), der in einem Betrieb der elektrischen Maschine (1, 200) mit dem Rotor (4, 41) magnetisch zusammenwirkt,
- eine erste Lagervorrichtung (8),
- eine zweite Lagervorrichtung (81), und
- die Welle (5, 25), die in der ersten Lagervorrichtung (8) und der zweiten Lagervorrichtung (81) um eine Drehachse (3) der Welle (5, 25) drehbar gelagert ist.

3. Elektrische Maschine (1, 200) nach Anspruch 2, wobei das erste Material der Wärmeleitvorrichtung (12) ein Nichteisenmetall ist.

4. Elektrische Maschine (1, 200) nach Anspruch 2 oder 3, wobei der axiale Teil (301, 2301) der Welle (5, 25) einen Montageabschnitt (12) aufweist, an dem der Rotor (4, 41) mit einer kraftschlüssigen Verbindung befestigt ist, wobei die kraftschlüssige Verbindung die Stützvorrichtung (160) und den Montageabschnitt (11) umfasst, wobei die Stützvorrichtung (160) den Montageabschnitt (11) umschließt.

5. Elektrische Maschine (1, 200) nach einem der vorhergehenden Ansprüche 2 bis 4, wobei zumindest ein Teil der Verbindungsvorrichtung (26, 226) durch ein Druckgussverfahren am Blechpaket erzeugt ist.

6. Elektrische Maschine (1, 200) nach einem der vorhergehenden Ansprüche 2 bis 5, wobei der axiale Teil (301, 2301) der Welle (5, 25) eine axiale Bohrung (6) zur Abfuhr der Abwärme vom Rotor (4, 41) über die Welle (5, 25) aufweist.

7. Elektrische Maschine (1, 200) nach Anspruch 6, wobei die axiale Bohrung (6) eine radiale Begrenzungsfläche (324) mit einer Geometrie zur Abfuhr der Abwärme vom Rotor (4, 41) über die Welle (5, 25) aufweist.

8. Elektrische Maschine (1) nach einem der vorhergehenden Ansprüche 2 bis 7, wobei der axiale Teil (301) der Welle (5) sich über eine gesamte Länge der Welle (5) entlang der axialen Richtung (21) erstreckt.

9. Elektrische Maschine (200) nach einem der Ansprüche 2 bis 7, wobei der axiale Teil (2301) der Welle (25) ein erster Abschnitt einer Welle (25) ist, wobei die Welle (25) einen zweiten Abschnitt (302) und gegebenenfalls einen dritten Abschnitt oder noch weitere Abschnitte aufweist, die in der axialen Richtung (21) die Welle (25) vor oder hinter dem ersten Abschnitt fortsetzen.

10. Elektrische Maschine (1, 200) nach einem der vorhergehenden Ansprüche 2 bis 9, wobei das erste Material einen größeren Wärmeausdehnungskoeffizienten aufweist als das zweite Material.

11. Elektrische Maschine (1, 200) nach einem der vorhergehenden Ansprüche 2 bis 10, wobei das zweite Material eine spezifische Wärmeleitfähigkeit aufweist, die größer als 100Wm⁻¹K ist.

12. Elektrische Maschine (1, 200) nach einem der vorhergehenden Ansprüche 2 bis 11, wobei das zweite Material Aluminium oder Kupfer oder Silber aufweist.

13. Elektrische Maschine (1, 200) nach einem der vorhergehenden Ansprüche 2 bis 12, wobei die Stützvorrichtung (160) Nuten (20) aufweist, in denen Leiter (23) zur Abfuhr der Abwärme vom Rotor (4, 41) über die Welle (5, 25) angeordnet sind, wobei die Leiter (23, 223) mit dem Kurzschlussring (17) verbunden sind.

## Claims

1. Rotor/shaft combination for an electric machine (1, 200), wherein the rotor/shaft combination comprises a rotor (4, 41) and a shaft (5, 25),
- wherein the rotor (4, 41) has a support device (160) and a heat-conducting device (12) for removing waste heat from the rotor (4, 41) by way of the shaft (5, 25),
- wherein the shaft (5, 25) can be rotationally mounted, about a rotational axis (3) of the shaft (5, 25), in a first bearing device (8) of the electric machine (1, 200) and in a second bearing device (81) of the electric machine (1, 200),
- wherein the support device (160) is a laminated core having sheets (16) which are stacked in an axial direction (21),
- wherein the rotor (4, 41) is secured to the shaft (5, 25) or can be secured at the correct position to the associated shaft (5,25),
- wherein the heat-conducting device (12) has, for removing the waste heat from the rotor (4, 41) by way of the shaft (5, 25), an axial part (301, 2301) of the shaft (5, 25) with a first material having a specific thermal conductivity which is greater than 100 Wm⁻¹K,
- wherein the sheets (16) are fixed in the laminated core by means of a connecting device (26, 226), wherein the connecting device (26, 226) has a short-circuiting ring (17) with a second material, wherein the short-circuiting ring (17) is secured to a first axial end (162) of the support device (160), wherein, for the purpose of removing the waste heat from the rotor (4, 41) by way of the shaft (5, 25), the short-circuiting ring (17) is linked directly to the axial part (301) of the shaft (5, 25) or, by securing the rotor (4, 41), can be linked at the correct position on the associated shaft (5, 25), wherein the quantified difference between the coefficients of thermal expansion of the first material and the second material is less than 4 x 10⁻⁶K⁻¹.

2. Electric machine (1,200) with a rotor/shaft combination according to claim 1,
- wherein the rotor (4, 41) is secured to the shaft (5, 25),
- wherein, for the purpose of removing the waste heat from the rotor (4, 41) by way of the shaft (5, 25), the short-circuiting ring (17) is linked directly to the axial part (301) of the shaft (5, 25),
comprising:
- a stator (2) which magnetically interacts with the rotor (4, 41) when the electric machine (1, 200) is in operation,
- a first bearing device (8),
- a second bearing device (81), and
- a shaft (5, 25) which is rotationally mounted, about a rotational axis (3) of the shaft (5, 25), in the first bearing device (8) and in the second bearing device (81)..

3. Electric machine (1, 200) according to claim 2, wherein the first material of the heat-conducting device (12) is a nonferrous metal.

4. Electric machine (1, 200) according to claim 2 or 3, wherein the axial part (301, 2301) of the shaft (5, 25) has a mounting section (12) to which the rotor (4, 41) is secured with the aid of a frictionally locked connection, wherein the frictionally locked connection comprises the support device (160) and the mounting section (11), wherein the support device (160) surrounds the mounting section (11).

5. Electric machine (1, 200) according to one of preceding claims 2 to 4, wherein at least part of the connecting device (26, 226) is produced by means of a die casting process on the laminated core.

6. Electric machine (1, 200) according to one of preceding claims 2 to 5, wherein the axial part (301, 2301) of the shaft (5, 25) has an axial bore hole (6) for removing the waste heat from the rotor (4, 41) by way of the shaft (5, 25).

7. Electric machine (1, 200) according to claim 6, wherein the axial bore hole (6) has a radial boundary surface (324) with a geometry for removing the waste heat from the rotor (4, 41) by way of the shaft (5, 25).

8. Electric machine (1) according to one of preceding claims 2 to 7, wherein the axial part (301) of the shaft (5) extends over an overall length of the shaft (5) along the axial direction (21).

9. Electric machine (200) according to one of claims 2 to 7, wherein the axial part (2301) of the shaft (25) is a first section of a shaft (25), wherein the shaft (25) has a second section (302) and where appropriate a third section or even further sections, which continue the shaft (25) in the axial direction (21) before or after the first section.

10. Electric machine (1, 200) according to one of preceding claims 2 to 9, wherein the first material has a greater coefficient of thermal expansion than the second material.

11. Electric machine (1, 200) according to one of preceding claims 2 to 10, wherein the second material has a specific thermal conductivity which is greater than 100 Wm⁻¹K.

12. Electric machine (1, 200) according to one of preceding claims 2 to 11, wherein the second material has aluminium or copper or silver.

13. Electric machine (1, 200) according to one of preceding claims 2 to 12, wherein the support device (160) has slots (20) in which conductors (23) are arranged for the purpose of removing the waste heat from the rotor (4, 41) by way of the shaft (5, 25), wherein the conductors (23, 223) are connected to the short-circuiting ring (17).

## Revendications

1. Combinaison rotor-arbre d'une machine (1, 200) électrique, la combinaison rotor-arbre ayant un rotor (4, 41) et un arbre (5, 25),
- dans laquelle le rotor (4, 41) a un dispositif (160) d'appui et un dispositif (12) de conduction de la chaleur pour évacuer par l'arbre (5, 25) une chaleur perdue par le rotor (4, 41),
- dans laquelle l'arbre (5, 25) peut être monté tournant, autour d'un axe (3) de rotation de l'arbre (5, 25), dans un premier dispositif (8) de palier de la machine (1, 200) électrique et dans un deuxième (81) de palier de la machine (1, 200) électrique,
- dans laquelle le dispositif (160) d'appui est un paquet de tôles, qui a des tôles (16) feuilletées dans une direction (21) axiale,
- dans laquelle le rotor (4, 41) est fixé à l'arbre (5, 25) ou peut être fixé à l'arbre (5, 25), qui lui appartient, en la position correcte,
- dans laquelle le dispositif (12) de conduction de la chaleur a, pour évacuer par l'arbre (5, 25) la chaleur perdue par le rotor (4, 41), une partie (301, 2301) axiale de l'arbre (5, 25), en un premier matériau, qui a une conductivité thermique spécifique, qui est plus grande que 100 Wm⁻¹K,
- dans laquelle les tôles (16) sont immobilisées dans le paquet de tôles par un dispositif (26, 226) de liaison, le dispositif (26, 226) de liaison ayant un anneau (17) de court-circuit en un deuxième matériau, l'anneau (17) de court-circuit étant fixé à une première extrémité (162) axiale du dispositif (160) d'appui, dans laquelle, pour l'évacuation par l'arbre (5, 25) de la chaleur perdue par le rotor (4, 41), l'anneau (17) de court-circuit est rattaché directement à la partie (301) axiale de l'arbre (5, 25) ou peut être rattaché en la bonne position, par fixation du rotor (4, 41), à l'arbre (5, 25), qui lui appartient, la différence en valeur absolue des coefficients de dilatation thermique du premier matériau et du deuxième matériau étant plus petite que 4 x 10⁻⁶K⁻¹.

2. Machine (1, 200) électrique ayant une combinaison rotor-arbre suivant la revendication 1,
- dans laquelle le rotor (4, 41) est fixé à l'arbre (5, 25),
- dans laquelle, pour l'évacuation par l'arbre (5, 25) de la chaleur perdue par le rotor (4, 41), l'anneau (17) de court-circuit est rattaché directement à la partie (301) axiale de l'arbre (5, 25),
comprenant
- un stator (2), qui, dans un fonctionnement de la machine (1, 200) électrique, coopère magnétiquement avec le rotor (4, 41),
- un premier dispositif (8) de palier,
- un deuxième dispositif (81) de palier, et
- l'arbre (5, 25), qui est monté tournant, autour d'un axe (3) de rotation de l'arbre (5, 25), dans le premier dispositif (8) de palier et le deuxième dispositif (81) de palier.

3. Machine (1, 200) électrique suivant la revendication 2, dans laquelle le premier matériau du dispositif (12) de conduction de la chaleur est un métal non ferreux.

4. Machine (1, 200) électrique suivant la revendication 2 ou 3, dans laquelle la partie (301, 2301) axiale de l'arbre (5, 25) a une section (12) de montage, où le rotor (4, 41) est fixé par une liaison à coopération de force, la liaison à coopération de force comprenant le dispositif (160) d'appui et la section (11) de montage, le dispositif (160) d'appui entourant la section (11) de montage.

5. Machine (1, 200) électrique suivant l'une des revendications 2 à 4 précédentes, dans laquelle au moins une partie du dispositif (26, 226) de liaison est produite par un procédé de coulée sous pression au paquet de tôles.

6. Machine (1, 200) électrique suivant l'une des revendications 2 à 5 précédentes, dans laquelle la partie (301, 2301) axiale de l'arbre (5, 25) a un trou (6) axial pour l'évacuation par l'arbre (5, 25) de la chaleur perdue par le rotor (4, 41).

7. Machine (1, 200) électrique suivant la revendication 6, dans laquelle le trou (6) axial a une surface (324) de démarcation radiale, ayant une géométrie pour l'évacuation par l'arbre (5, 25) de la chaleur perdue par le rotor (4, 41).

8. Machine (1, 200) électrique suivant l'une des revendications 2 à 7 précédentes, dans laquelle la partie (301) axiale de l'arbre (5) s'étend sur toute la longueur de l'arbre (5) suivant la direction (21) axiale.

9. Machine (1, 200) électrique suivant l'une des revendications 2 à 7, dans laquelle la partie (2301) axiale de l'arbre (25) est un premier tronçon d'un arbre (25), l'arbre (25) ayant un deuxième tronçon (302) et, le cas échéant, un troisième tronçon ou encore d'autres tronçons, qui, avant ou derrière le première tronçon, prolongent l'arbre (25), dans la direction (21) axiale

10. Machine (1, 200) électrique suivant l'une des revendications 2 à 9 précédentes, dans laquelle le premier matériau a un coefficient de dilatation thermique plus grand que le deuxième matériau.

11. Machine (1, 200) électrique suivant l'une des revendications 2 à 10 précédentes, dans laquelle le deuxième matériau a une conductibilité thermique spécifique, qui est plus grande que 100Wm⁻¹K.

12. Machine (1, 200) électrique suivant l'une des revendications 2 à 11 précédentes, dans laquelle le deuxième matériau a de l'aluminium ou du cuivre ou de l'argent.

13. Machine (1, 200) électrique suivant l'une des revendications 2 à 12 précédentes, dans laquelle le dispositif (160) d'appui a des encoches (20), dans lesquelles sont disposés des conducteurs (23) d'évacuation par l'arbre (5, 25) de la chaleur perdue par le rotor (4, 41), les conducteurs (23, 223) étant reliés à l'anneau (17) de court-circuit.
